# EUROPEAN PATENT APPLICATION

(11) **EP 4 432 450 A1**
(43) Date of publication of application: **18.09.2024**
(21) Application number: 23843276.9
(22) Date of filing: 13.07.2023
(51) Int. Cl.: H01M 50/477, H01M 50/367, H01M 50/209, H01M 50/249, H01M 10/6551, H01M 50/24, H01M 50/211

(54) **BATTERY PACK AND VEHICLE INCLUDING SAME**

(30) Priority: 20.07.2022 KR 20220089813; 31.08.2022 KR 20220110391; 21.03.2023 KR 20230036814
(71) Applicant: LG Energy Solution, Ltd., Seoul 07335 (KR)
(72) Inventor: PARK, Jin-Yong, Daejeon 34122 (KR); KWON, Woo-Yong, Daejeon 34122 (KR); LEE, Myung-Woo, Daejeon 34122 (KR); KIM, Seung-Joon, Daejeon 34122 (KR); KIM, In-Soo, Daejeon 34122 (KR); CHUNG, Se-Yun, Daejeon 34122 (KR); CHI, Ho-June, Daejeon 34122 (KR); SHIN, Song-Ju, Daejeon 34122 (KR); KANG, Jong-Mo, Daejeon 34122 (KR); KIM, Kyung-Woo, Daejeon 34122 (KR); MOON, Duck-Hee, Daejeon 34122 (KR); LEE, Tae-Kyeong, Daejeon 34122 (KR); JEONG, Jong-Ha, Daejeon 34122 (KR); HWANG, Ji-Soo, Daejeon 34122 (KR)
(74) Representative: Plasseraud IP
(86) International application number: PCT/KR2023/010052
(87) International publication number: WO 2024/019426

(57) **Abstract**

A battery pack according to one aspect of the present disclosure includes a plurality of pouch-type battery cells stacked in at least one direction; a pack case accommodating the pouch-type battery cells in the internal space; and a cell cover that at least partially surrounds at least some of the pouch-type battery cells among the plurality of pouch-type battery cells in the internal space of the pack case, wherein the cell cover has a separation space between the cell cover and the wrapped pouch-type battery cell and includes a partition member that extends from the inner side of the cell cover and is configured to partition the separation space.

## Description

### TECHNICAL FIELD

The present disclosure relates to a battery pack and a vehicle including the same, and more specifically, to a battery pack having excellent safety against thermal event and a vehicle including the same. The present application claims priority to Korean Patent Application No. 10-2022-0089813 filed on July 20, 2022, Korean Patent Application No. 10-2022-0110391 filed on August 31, 2022 and Korean Patent Application No. 10-2023-0036814 filed on March 21, 2023, the disclosures of which are incorporated herein by reference.

### BACKGROUND ART

As the technology development and demand for various mobile devices, electric vehicles, energy storage systems (ESSs), and the like increase significantly, the interest in and demand for secondary batteries as an energy source are rapidly increasing. Nickel cadmium batteries or nickel hydrogen batteries have been widely used as conventional secondary batteries, but recently, lithium secondary batteries having advantages of free charge/discharge, very low self-discharge rate, and high energy density due to little memory effect compared to nickel-based secondary batteries, are widely used.

Such lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

In general, lithium secondary batteries may be classified into can-type secondary batteries in which electrode assemblies are embedded in a metal can and pouch-type secondary batteries in which electrode assemblies are embedded in a pouch of aluminum laminate sheets, depending on the shape of an exterior material.

Recently, battery packs have been widely used for driving or energy storage in medium/large devices such as electric vehicles and ESSs. A conventional battery pack includes one or more battery modules inside a pack case and a control unit that controls charge/discharge of the battery pack, such as a battery management system (BMS). Here, the battery module is configured to include a plurality of battery cells inside a module case. That is, in the case of a conventional battery pack, a plurality of battery cells (secondary batteries) are accommodated inside a module case to form each battery module, and one or more of these battery modules are accommodated inside the pack case to form a battery pack.

In particular, pouch-type batteries have advantages in various aspects, such as light weight and less dead space when stacked, but are problematic in that they are vulnerable to external impact and somewhat inferior in assemblability. Therefore, it is common for a battery pack to be manufactured by first modularizing a plurality of cells and then accommodating them inside a pack case.

However, conventional battery packs may be disadvantageous in terms of energy density, assemblability, coolability, and the like due to modularization. Specifically, in the process of modularizing a plurality of battery cells by accommodating them inside a module case, the volume of the battery pack may be unnecessarily increased or the space occupied by the battery cells may be reduced due to various components such as the module case or stacking frame. A battery module is first configured by modularizing a plurality of battery cells and then the battery module is accommodated in a pack case, whereby there is a problem that the manufacturing process of the battery pack becomes complicated. The module case is accommodated inside the pack case and the battery cells are accommodated inside the module case, and thus, when the heat of the battery cells accommodated inside the module case is discharged to the outside of the pack case through the module case, the cooling efficiency may be reduced and the cooling structure may also be complicated.

In addition, in the case of battery packs, one of the most important issues is safety. In particular, when a thermal event occurs in any one of the plurality of battery cells included in the battery pack, propagation of this event to other battery cells needs to be suppressed.

If thermal propagation between battery cells is not properly suppressed, this may lead to thermal events in other battery cells included in the battery pack, which may cause bigger problems such as ignition, explosion, or the like of the battery pack. Moreover, ignition or explosion generated in the battery pack may cause significant damage to people or property in the vicinity. Therefore, in the case of such battery packs, a configuration capable of adequately controlling the above-mentioned thermal events is required.

### DISCLOSURE

### Technical Problem

The present disclosure is designed to solve the problems of the related art, and therefore the present disclosure is directed to providing a battery pack having excellent energy density, assemblability and/or coolability, and a vehicle including the same.

The present disclosure is also directed to providing a battery pack capable of ensuring excellent safety in the event of a thermal event, and a vehicle including the same.

However, technical problems to be solved by the present disclosure are not limited to the above-described problems, and other problems not mentioned herein may be clearly understood by those skilled in the art from the following description of the present disclosure.

### Technical Solution

A battery pack according to one aspect of the present disclosure includes a plurality of pouch-type battery cells stacked in at least one direction; a pack case accommodating the pouch-type battery cells in the internal space; and a cell cover that at least partially surrounds at least some of the pouch-type battery cells among the plurality of pouch-type battery cells in the internal space of the pack case, wherein the cell cover has a separation space between the cell cover and the wrapped pouch-type battery cell and includes a partition member that extends from the inner side of the cell cover and is configured to partition the separation space.

Here, the cell cover may be configured to support the pouch-type battery cell in an upright state.

And, the cell cover may cover the upper side of the pouch-type battery cell, and the partition member may protrude from the inner top of the cell cover and extend downward.

In addition, the cell cover may be configured to partially surround the pouch-type battery cell so that at least one side of the wrapped pouch-type battery cell is exposed toward the pack case.

In addition, the pouch-type battery cell may have a receiving portion in which an electrode assembly is accommodated and edge portions around the receiving portion, wherein the cell cover may be configured to surround the receiving portion and a part of the edge portions of the pouch-type battery cell.

In addition, the cell cover may be provided to cover both sides of the receiving portion and an upper edge portion of the wrapped pouch-type battery cell.

Here, the cell cover may include an upper cover portion configured to surround the top of the upper edge portion of the pouch-type battery cell, a first side cover portion extending downward from one end of the upper cover portion and surrounding the outside of one side receiving portion of the wrapped pouch-type battery cell, and a second side cover portion extending downward from the other end of the upper cover portion and surrounding the outside of the other side receiving portion of the wrapped pouch-type battery cell.

A thickness of the partition member may be thinner than a thickness of the upper cover portion, a thickness of the first side cover portion, and a thickness of the second side cover portion.

According to an embodiment, the separation space is formed between the upper cover portion and the pouch-type battery cell.

At this time, the partition member may extend downward from the upper cover portion to the top of the pouch-type battery cell.

The pouch-type battery cell may be configured to be in close contact with the inner surfaces of the first side cover portion and the second side cover portion.

The cell cover may surround a plurality of pouch-type battery cells, and the partition member may be configured to partition each of the plurality of pouch-type battery cells.

In addition, the cell cover may surround a plurality of pouch-type battery cells, and the partition member may be configured to form a venting path corresponding to each of the plurality of pouch-type battery cells along a stacking direction of the plurality of pouch-type battery cells.

The pouch-type battery cell may have a receiving portion in which an electrode assembly is accommodated and edge portions around the receiving portion, wherein the cell cover may be configured to surround the receiving portion and the upper edge portion of the wrapped pouch-type battery cell, wherein the upper edge portion may be a sealing portion, wherein the cell cover may surround a plurality of pouch-type battery cells, and the partition member may shield the upper edge portion of any one pouch-type battery cell from directly facing the upper edge portion of another pouch-type battery cell.

According to an embodiment, the cell cover surrounds a plurality of pouch-type battery cells, the cell cover exposes electrode leads protruding in the longitudinal direction of the pouch-type battery cell, the plurality of pouch-type battery cells are stacked in the width direction perpendicular to the longitudinal direction, and the partition member is configured such that partition walls constructed continuously along the longitudinal direction are disposed to be spaced apart along the width direction.

Venting gas may move through the separation space, and the partition member may be configured to block the movement of the venting gas.

For example, the cell cover may expose electrode leads protruding in the longitudinal direction of the pouch-type battery cell, the venting gas may move along the longitudinal direction, and the partition member may be configured such that partition walls constructed continuously along the width direction perpendicular to the longitudinal direction are disposed to be spaced apart along the longitudinal direction.

At this time, the cell cover may include an upper cover portion configured to surround the top of the upper edge portion of the pouch-type battery cell, a first side cover portion extending downward from one end of the upper cover portion, and a second side cover portion extending downward from the other end of the upper cover portion, wherein the partition wall may be a plate in contact with the inner surface of the upper cover portion, the top inner surface of the first side cover portion, and the top inner surface of the second side cover portion.

In addition, the partition wall may be provided so that a plane direction thereof is perpendicular to the inner surface of the upper cover portion, or may be provided in a shape where the plane direction is inclined at an acute or obtuse angle.

The partition member may also be a portion provided in a concavo-convex shape on the inner surface of the cell cover.

At this time, the cell cover may expose electrode leads protruding in the longitudinal direction of the pouch-type battery cell, the venting gas may move along the longitudinal direction, and the concave and convex portions in a concavo-convex shape may be positioned alternately along the longitudinal direction.

The cell cover may be configured in a form bending one plate.

The cell cover may include an insulating coating layer on the inner surface.

The battery pack may include a heat sink, and the pouch-type battery cell may be thermally coupled to the heat sink.

And, a thermal resin may be interposed between the pouch-type battery cell and the heat sink.

In addition, the battery pack according to the present disclosure may also further include a control module accommodated in the internal space of the pack case and configured to control charge/discharge of the pouch-type battery cell.

In addition, a vehicle according to another aspect of the present disclosure may include a battery pack according to the present disclosure.

### Advantageous Effects

The battery pack of the present disclosure is a cell to pack (CTP) concept, and a module case or the like is eliminated, which may improve cooling performance and energy density.

According to one aspect of the present disclosure, a plurality of pouch-type battery cells may be stably accommodated inside a pack case without the configuration of a stacking frame such as a plastic cartridge or a separate module case.

In particular, according to an embodiment of the present disclosure, it is possible to easily implement a configuration in which a plurality of pouch-type battery cells are stacked side by side in the horizontal direction in a vertically upright state.

According to one aspect of the present disclosure, the energy density of a battery pack may be improved. Moreover, according to an embodiment of the present disclosure, the battery cells are directly accommodated in the pack case without modularization, and thus a battery pack that does not require a module case for the battery module may be manufactured. Accordingly, by reducing the space occupied by the module case, more and more battery cells may be disposed inside the pack case. Therefore, there is an effect of further improving the energy density of the battery pack. Pouch-type battery cells may be directly assembled to the pack case of the battery pack, thereby maximizing space utilization of the battery pack and significantly improving energy capacity.

Moreover, according to one aspect of the present disclosure, the pouch-type battery cells having a flexible material case are easily made into a solid form, so that a configuration in which they are directly stacked inside a pack case may be more easily implemented. Accordingly, the assemblability and mechanical stability of the battery pack may be improved.

In addition, according to one aspect of the present disclosure, the cooling efficiency of the battery pack may be further improved. In particular, in the case of an embodiment of the present disclosure, a portion of each pouch-type battery cell is directly exposed to the pack case, so that heat from each pouch-type battery cell may be effectively discharged to the outside through the pack case.

Moreover, according to one aspect of the present disclosure, when thermal runaway occurs in a specific battery cell, it is possible to effectively respond to the thermal event. In particular, in the case of the present disclosure, it is possible to block or appropriately control the accumulation or discharge of heat corresponding to the ignition source among the three elements (fuel, oxygen, and ignition source) that generate flames. Furthermore, in the case of the present disclosure, emission control of venting gas, directional venting, spark blocking, and the like may be implemented so as to block heat accumulation and prevent flame emission.

In addition, according to one aspect of the present disclosure, internal short circuits or structural collapse may be prevented even when a thermal event occurs.

According to the present disclosure, a battery pack with improved safety against thermal runaway, fire, explosion, and the like, that is, thermal safety, are provided. When heat is generated from some battery cells in a battery pack including a plurality of battery cells, the heat propagation to surrounding battery cells may be stably blocked.

According to one aspect of the present disclosure, in the event of thermal runaway of a battery cell, a flow of venting gas or flame may be guided through an inner upper portion of the cell cover and discharged to the outside through an opening in the cell cover. Accordingly, the flow of venting gas or flame may be guided in a more constant direction, and the transfer of venting gas or flame between adjacent battery cells may be minimized.

In addition, according to one aspect of the present disclosure, the safety of the battery pack may be improved. In particular, according to an embodiment of the present disclosure, gas emitted from each battery cell may be smoothly discharged to the outside. Moreover, according to an embodiment of the present disclosure, the discharge direction of gas or flame emitted from a battery cell may be controlled. Therefore, thermal runaway propagation between adjacent battery cells may be effectively prevented.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is an exploded, schematic perspective view showing a partial configuration of a battery pack according to an embodiment of the present disclosure.
FIG. 2 is an exploded perspective view schematically showing the configuration of a pouch-type battery cell and a cell cover accommodated inside a battery pack according to an embodiment of the present disclosure.
FIG. 3 is an exploded perspective view schematically showing the configuration of a pouch-type battery cell and a cell cover accommodated inside a battery pack according to another embodiment of the present disclosure.
FIG. 4 is a combined perspective view of the configuration of FIG. 2.
FIG. 5 is a cross-sectional view of FIG. 4.
FIG. 6 is a perspective view of the cell cover shown in FIG. 2.
FIG. 7 is a bottom perspective view of the cell cover shown in FIG. 2.
FIG. 8 is a view schematically showing a partial cross-sectional configuration of a battery pack according to an embodiment of the present disclosure.
FIG. 9 is a perspective view schematically showing another cell cover that may be included in a battery pack according to an embodiment of the present disclosure.
FIG. 10 is a view schematically showing a cross-sectional configuration along the Y-axis direction while the cell cover shown in FIG. 9 surrounds the pouch-type battery cell.
FIG. 11 is a view schematically showing a cross-sectional configuration of the cell cover shown in FIG. 9 along the X-axis direction.
FIG. 12 is a view corresponding to FIG. 11 and shows another embodiment of the cell cover of FIG. 9.
FIG. 13 is a view corresponding to FIG. 11 and shows still another embodiment of the cell cover of FIG. 9.
FIG. 14 is a view schematically showing the configuration of a vehicle according to an embodiment of the present disclosure.

### BEST MODE

Hereinafter, preferred embodiments of the present disclosure will be described in detail with reference to the accompanying drawings. The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

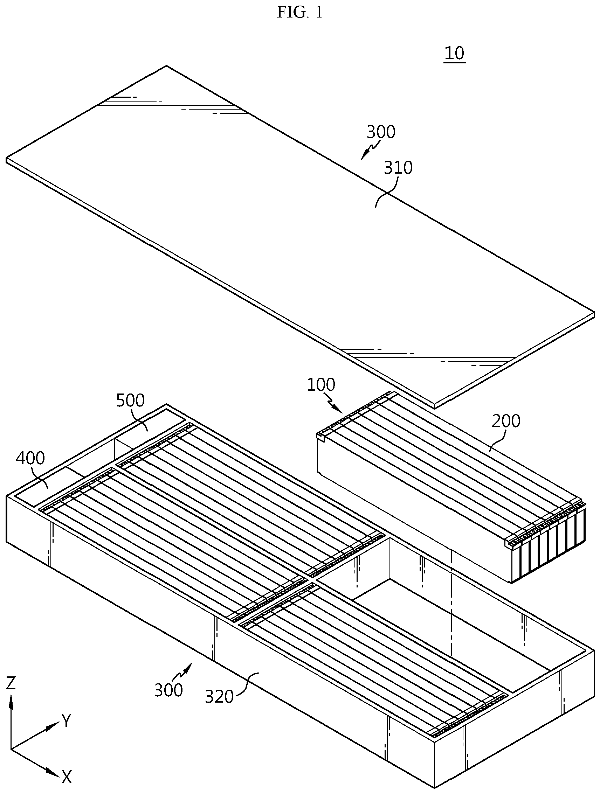

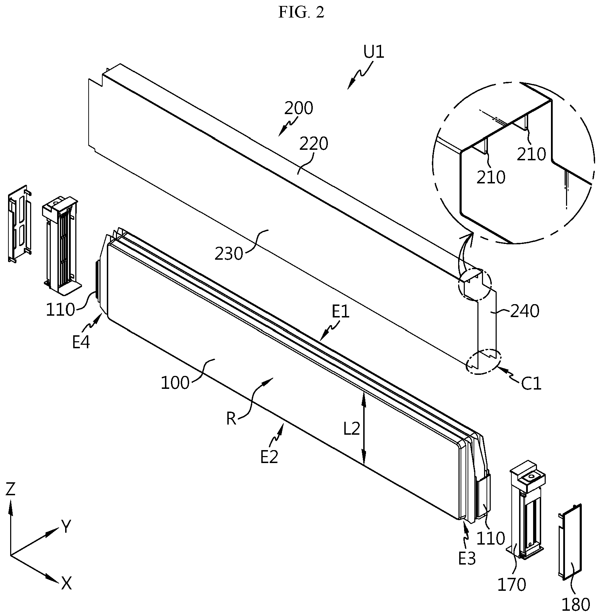

FIG. 1 is an exploded, schematic perspective view showing a partial configuration of a battery pack according to an embodiment of the present disclosure. FIG. 2 is an exploded perspective view schematically showing the configuration of a pouch-type battery cell and a cell cover accommodated inside a battery pack according to an embodiment of the present disclosure.

Referring to FIGS. 1 and 2, the battery pack 10 according to an embodiment of the present disclosure includes a pouch-type battery cell 100, a pack case 300, and a cell cover 200.

The pouch-type battery cell 100 may include an electrode assembly, an electrolyte, and a pouch exterior material. A plurality of such pouch-type battery cells 100 may be included in the battery pack 10.

And, these plurality of pouch-type battery cells 100 may be stacked in at least one direction. For example, referring to what is shown in FIGS. 1 and 2, a plurality of pouch-type battery cells 100 may be stacked and disposed in the horizontal direction, for example, in the left-right direction (Y-axis direction in the drawing). For example, if the direction along the long axis of the pouch-type battery cells 100 is referred to as the longitudinal direction (X-axis direction), the pouch-type battery cells 100 may be stacked in the width direction (Y-axis direction) perpendicular to this longitudinal direction. In addition, the plurality of pouch-type battery cells 100 may be disposed in the front-rear direction (X-axis direction), as shown in FIG. 1. Moreover, the plurality of pouch-type battery cells 100 may be disposed in the horizontal direction (Y-axis direction), and may be disposed in a shape forming multiple rows in the left-right and horizontal directions. For example, referring to what is shown in FIG. 1, the plurality of pouch-type battery cells 100 may be stacked in a form where cell rows disposed in the left-right direction are provided in two rows in the front-rear direction.

The battery pack according to the present disclosure may employ various types of pouch-type battery cells 100 known at the time of filing the present disclosure, and therefore a detailed description of the configuration of such pouch-type battery cells 100 will be omitted.

The pack case 300 may have an empty space therein to accommodate a plurality of pouch-type battery cells 100. For example, the pack case 300 may include an upper case 310 and a lower case 320, as shown in FIG. 1. As a more specific example, the lower case 320 may be configured in the form of a box with an open top to accommodate a plurality of battery cells in the internal space. And, the upper case 310 may be configured in the form of a cover that covers the top opening of the lower case 320. In this case, the upper case 310 may also be configured in the form of a box with an open bottom. In addition, the cell cover 200 together with a plurality of pouch-type battery cells 100 may be accommodated in the internal space of the pack case 300. The pack case 300 may be made of a plastic or metal material. In addition, the pack case 300 may employ various exterior materials of battery packs known at the time of filing the present disclosure.

The cell cover 200 may be configured to surround the pouch-type battery cell 100 in the internal space of the pack case 300. That is, the cell cover 200 may be configured to surround at least some of the pouch-type battery cells 100 among the plurality of pouch-type battery cells 100 included in the battery pack 10. Moreover, the cell cover 200 may be provided to at least partially surround the pouch-type battery cell 100.

And, the cell cover 200 may be configured to support the stacked state of the plurality of pouch-type battery cells 100 inside the pack case 300 through a structure surrounding the battery cells in this way. For example, a plurality of pouch-type battery cells 100 may be stacked in the horizontal direction, as shown in FIGS. 1 and 2. In this case, the cell cover 200 may be configured to stably maintain the stacked state of the plurality of pouch-type battery cells 100 stacked in the horizontal direction.

According to this aspect of the present disclosure, a plurality of pouch-type battery cells 100 may be directly seated and accommodated inside the pack case 300 without a module case. In particular, in the case of the pouch-type battery cell 100, the exterior material is made of a soft material such as the pouch of aluminum laminate sheet, so it can be said that it is vulnerable to external impact and has low hardness. Therefore, it is not easy to accommodate the pouch-type battery cell 100 itself inside the pack case 300 without accommodating it in the module case. However, in the case of the present disclosure, the plurality of pouch-type battery cells 100 are coupled to the cell cover 200 in a state where at least a portion is surrounded by the cell cover 200 and then are directly accommodated inside the pack case 300, and their stacking state may be maintained stably.

Moreover, in the case of the present disclosure, a CTP type battery pack using the pouch-type battery cell 100 may be implemented more efficiently. That is, in the case of the present disclosure, the battery pack 10 may be arranged in a form of directly accommodating the pouch-type battery cell 100 inside the pack case 300, rather than accommodating the pouch-type battery cell 100 inside a separate module case and accommodating this module case inside the pack case 300. In this case, at least one side of the pouch-type battery cell 100 may be exposed to the outside of the cell cover 200 and may be disposed to directly face the pack case 300.

Therefore, according to this aspect of the present disclosure, the battery pack 10 does not need to be further provided with a module case, a stacking frame, or fastening members such as bolts for maintaining the stacked state of the cells. Accordingly, the space occupied by other components, such as a module case or a stacking frame, or the resulting space for securing tolerances may be eliminated. Therefore, since the battery cells may occupy more space as much as the removed space, the energy density of the battery pack may be further improved.

In addition, according to this aspect of the present disclosure, since a module case, stacking frame, a bolt, or the like are not provided, the volume or weight of the battery pack may be reduced and the manufacturing process may be simplified.

In addition, according to this aspect of the present disclosure, handling of the pouch-type battery cell 100 may become easier. For example, when accommodating a plurality of pouch-type battery cells 100 inside the pack case 300, the pouch-type battery cells 100 may be held by a jig or the like. At this time, the jig may hold the cell cover 200 surrounding the pouch-type battery cell 100, rather than directly holding the pouch-type battery cell 100. Accordingly, damage to or breakage of the pouch-type battery cell 100 caused by the jig may be prevented.

In addition, according to this aspect of the present disclosure, the cell cover 200 is coupled to the pouch-type battery cell 100, so that the pouch-type battery cell 100 may be effectively protected without a module case.

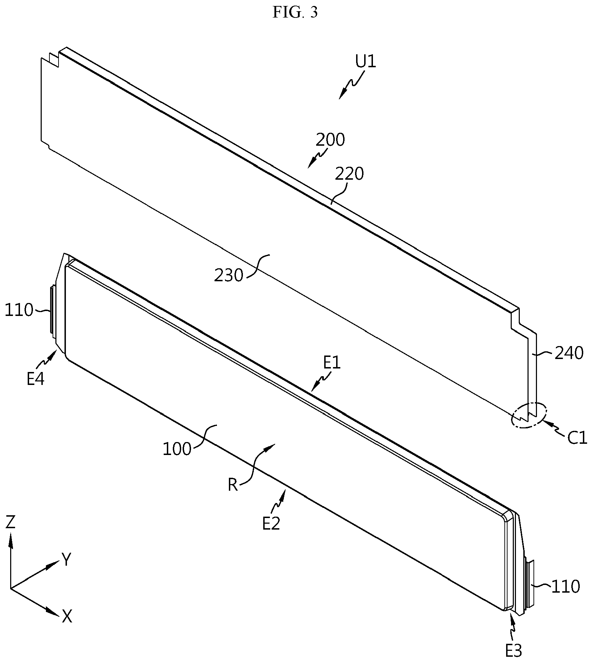

FIG. 3 is an exploded perspective view schematically showing the configuration of a pouch-type battery cell and a cell cover accommodated inside a battery pack according to another embodiment of the present disclosure. The cell cover 200 will be described in more detail with reference to FIGS. 2 and 3.

The cell cover 200 may be configured to surround one or more pouch-type battery cells 100. For example, in the embodiment of FIG. 2, one cell cover 200 is shown in a form surrounding three pouch-type battery cells 100. In this way, the cell cover 200 may be configured to surround two or more pouch-type battery cells 100 together.

In the embodiment of FIG. 3, one cell cover 200 is shown in a form surrounding one pouch-type battery cell 100. As shown here, one cell cover 200 may also be configured to surround only one pouch-type battery cell 100. In this case, it can be said that the cell cover 200 is individually coupled to each pouch-type battery cell 100 among the plurality of pouch-type battery cells 100.

The cell cover 200 may be at least partially adhered to the outer surface of the pouch-type battery cell 100. For example, an inner surface of the cell cover 200 may be adhered to the receiving portion of the pouch-type battery cell 100. The member for adhesion may be thermally conductive. Through this adhesion, the cell cover 200 is firmly coupled to the pouch-type battery cell 100 and may help discharge heat generated in the pouch-type battery cell 100 to the outside of the pouch-type battery cell 100.

One or more cell covers 200 may be included in the battery pack 10. The cell cover 200 may be configured to group and unitize a plurality of pouch-type battery cells 100 included in the battery pack. In this case, one cell cover 200 can be said to constitute one cell unit. And, the one cell unit may include one or multiple pouch-type battery cells 100.

For example, one cell unit is shown, as indicated by U1 in FIG. 2. The battery pack 10 may include a plurality of cell units U1, and its scale may be easily expanded by increasing the number of cell units U1. This cell unit U1 facilitates handling and mounting of the battery cells 100 in the process of manufacturing the battery pack 10 including a plurality of pouch-type battery cells 100, and while preventing damage to the battery cells 100, it has the effect of simplifying and lightening the structures required for mounting the battery cells 100.

In this case, it can be said that a plurality of cell covers 200 are included in the battery pack 10. For example, when the cell cover 200 is configured to surround one pouch-type battery cell 100, the battery pack 10 may include the same number of cell covers 200 as the number of pouch-type battery cells 100. In another example, when the cell cover 200 is configured to surround two or more pouch-type battery cells 100, the battery pack 10 may include a smaller number of cell covers 200 than the number of pouch-type battery cells 100.

The cell cover 200 may be configured to support a plurality of pouch-type battery cells 100 in an upright state. As shown in FIG. 2, each pouch-type battery cell 100 has two wide surfaces, and a sealing portion or a folded portion of the pouch exterior material may be present at a narrow edge portion connecting the two wide surfaces. Therefore, it is generally difficult to stack pouch-type battery cells 100 in a vertically upright state. However, in the battery pack according to the present disclosure, the cell cover 200 may be configured to support the upright state, that is, the standing state, of the wrapped pouch-type battery cells 100 while surrounding one or more pouch-type battery cells 100.

In particular, the cell cover 200 may be configured such that a plurality of pouch-type battery cells 100 may be stacked in the horizontal direction in a vertically (Z-axis direction in the drawing) upright state. For example, the plurality of cell covers 200 may be stacked on each other in the horizontal direction, and each cell cover 200 may be configured to surround one or more pouch-type battery cells 100. In this case, the configuration in which the plurality of pouch-type battery cells 100 are stacked side by side in the horizontal direction while each is upright may be stably maintained by the cell cover 200.

In particular, the cell cover 200 may be configured to be self-supporting in the internal space of the pack case 300. That is, the cell cover 200 may be configured to remain upright on its own without the help of other components provided in the battery pack 10, such as the pack case 300, the pouch-type battery cell 100, or the like.

For example, the cell cover 200 may be directly seated on the bottom surface of the lower case 320 in the embodiment of FIG. 1. At this time, a portion of the cell cover 200, such as a lower end portion of the cell cover 200 indicated by C1 in FIG. 2, may be seated in direct contact with the bottom surface of the lower case 320. And, when the lower end portion of the cell cover 200 is seated in this way, the cell cover 200 may be configured to remain stably seated. In this case, if the cell cover 200 is made of a metal material with excellent rigidity such as steel, especially SUS material, the self-standing state may be maintained more stably. Therefore, in this case, the standing state of the pouch-type battery cell 100 may be more reliably supported.

The cell cover 200 may be configured to partially surround the pouch-type battery cell 100 so that at least one side of the wrapped pouch-type battery cell 100 is exposed to the outside. That is, the cell cover 200 may be configured to surround only a portion of the pouch-type battery cell 100 without fully surrounding the entire pouch-type battery cell 100. In particular, the cell cover 200 may be configured such that at least one side of the pouch-type battery cell 100 is exposed toward the pack case 300. In this respect, the cell cover 200 may also be referred to by a term such as a cell sleeve.

For example, referring to the embodiment of FIG. 3, the cell cover 200 is configured to surround one pouch-type battery cell 100, and the wrapped pouch-type battery cell 100, that is, the lower portion of the pouch-type battery cell 100 accommodated in the internal space may not be surrounded by the cell cover 200. Accordingly, the lower portion of the pouch-type battery cell 100 may be exposed toward the pack case 300 and may directly face the pack case 300. In particular, referring to the embodiment of FIG. 1, the lower portion of the pouch-type battery cell 100 may be exposed toward the bottom surface of the lower case 320.

According to this embodiment of the present disclosure, the cooling performance of the battery pack 10 may be secured more effectively. In particular, according to the above embodiment, the pouch-type battery cell 100 and the pack case 300 may be in direct contact with each other through the open end of the cell cover 200. That is, one side of the pouch-type battery cell 100 disposed adjacent to the open end of the cell cover 200 may directly face or contact the pack case 300. Accordingly, the heat emitted from each pouch-type battery cell 100 is directly transferred to the pack case 300, so that cooling performance may be improved. In addition, in this case, since a separate cooling structure may not be required between the pouch-type battery cell 100 and the pack case 300, efficient cooling performance may be implemented. And, in this case, there may be no space for a cooling medium such as air to flow in between the pouch-type battery cells 100.

In addition, in this case, at least one side of the cell cover 200 is open, which may be advantageous in reducing the weight of the battery pack. For example, when the cell cover 200 is made of a material such as steel, if the lower end portion of the cell cover 200 is formed in an open shape, the weight of the cell cover 200 may be reduced by as much as the lower plate. Moreover, as shown in FIG. 1, the battery pack 10 may include many cell covers 200, and if all the cell covers 200 do not have a lower plate and are formed in an open shape, the weight of the battery pack 10 may be significantly reduced.

As shown in FIGS. 2 and 3, each pouch-type battery cell 100 may have a receiving portion indicated by 'R' and edge portions indicated by 'E1' to 'E4'. Here, the receiving portion R may be a portion that accommodates an electrode assembly in which a positive electrode plate and a negative electrode plate are stacked on each other with a separator interposed therebetween. In addition, an electrolyte may be accommodated in this receiving portion R. And, the edge portions E1 to E4 may be disposed in a form surrounding the receiving portion R.

In particular, the edge portions E1 to E4 may be sealing portions where the pouch exterior material, which is the case of the pouch-type battery cell 100, is sealed. For example, in the embodiment of FIGS. 2 and 3, there are four edge portions E1 to E4, which can be said to be located at the upper edge, lower edge, front edge, and rear edge, respectively, based on the receiving portion R. In this case, all four edge portions E1 to E4 may be sealing portions. Alternatively, some of the four edge portions E1 to E4 may be configured in a folded form that is not a sealing portion. For example, in the embodiment of FIGS. 2 and 3, the upper edge portion E1, the front edge portion E3, and the rear edge portion E4 are all sealing portions, but the lower edge portion E2 may be a portion where the pouch exterior material is folded. For example, the upper edge portion E1 may be a so-called double side folding (DSF) portion that is folded twice as a sealing portion of the pouch-type battery cell 100, and the lower edge portion E2 may be an unsealed portion of the pouch-type battery cell 100.

Here, a battery cell in which all four edge portions E1 to E4 are sealed may be referred to as a four-side sealing cell, and a battery cell in which three edge portions E1, E3, E4 are sealed may be referred to as a three-side sealing cell.

In this configuration, the cell cover 200 may be configured to surround the receiving portion R and a part of the edge portions E1 to E4 of the pouch-type battery cell 100, which may be a 4-side sealing cell or a 3-side sealing cell. Moreover, the cell cover 200 may be arranged to cover both sides of the receiving portion R and the upper edge portion E1 with respect to one or more pouch-type battery cells 100 accommodated and wrapped therein.

For example, as shown in FIG. 3, when one cell cover 200 is configured to surround one pouch-type battery cell 100, the cell cover 200 may be configured to surround both surfaces of the receiving portion R of the same pouch-type battery cell 100 (e.g., the left surface and right surface of the same receiving portion R) and a part of the edge portion of the corresponding pouch-type battery cell 100, particularly the upper edge portion E1 located at the upper side edge, from the outside.

In another example, when one cell cover 200 is configured to surround a plurality of pouch-type battery cells 100, for example, a plurality of battery cells disposed in the left-right direction, it may be configured to surround the outer surface of the receiving portion of the outermost battery cell and one side edge portions of the entire battery cell. As a more specific example, as shown in FIG. 2, when one cell cover 200 is configured to surround three pouch-type battery cells 100 stacked in the left-right direction, the cell cover 200 may be configured to surround the left surface of the receiving portion of the left battery cell, one side edge portion of the left battery cell, one side edge portion of the right battery cell, and the right surface of the receiving portion of the right battery cell.

In the illustrated example, the cell cover 200 partially surrounds the pouch-type battery cell 100 so that at least one side, particularly the lower side, of the wrapped pouch-type battery cell 100 forms an opening exposed toward the pack case 300. As such, according to one aspect of the present disclosure, the cooling efficiency of the battery pack 10 may be further improved. In particular, in the case of an embodiment of the present disclosure, a portion of each pouch-type battery cell 100 may be directly exposed to the pack case 300, so that the heat from each pouch-type battery cell 100 may be effectively discharged to the outside through the pack case 300.

In addition, according to this embodiment, the configuration of supporting and protecting one or more pouch-type battery cells 100 by one cell cover 200 may be easily implemented. In addition, according to the above embodiment, the process of handling one or more pouch-type battery cells 100 through the cell cover 200 may be performed easily and safely. Moreover, according to the above embodiment, one cell cover 200 may face the surfaces of the two receiving portions R with respect to the pouch-type battery cell 100 accommodated therein. Therefore, cooling performance between the receiving portion R and the cell cover 200 may be further improved. In particular, in this case, surface cooling is implemented through a wide surface of the receiving portion R, and thus cooling efficiency may be improved.

In particular, the cell cover 200 may be configured to surround an edge portion that is not provided with an electrode lead among several edge portions of the pouch-type battery cell 100 accommodated therein. For example, referring to the embodiment shown in FIGS. 2 and 3, the pouch-type battery cell 100 may have two electrode leads 110, that is, a positive electrode lead and a negative electrode lead. In this case, the two electrode leads may protrude in the longitudinal direction of the pouch-type battery cell 100. For example, the two electrode leads may be located at the front edge portion E3 and the rear edge portion E4, respectively. In this case, the cell cover 200 may be configured to surround one of the two remaining edge portions E1, E2 except for the front edge portion E3 and the rear edge portion E4.

The pouch-type battery cell 100 can also be said to be formed in an approximately hexahedral shape. And, electrode leads 110, that is, a negative electrode lead and a positive electrode lead, may be formed on two of the six surfaces, respectively. And, the cell cover 200 may be arranged to surround at least a portion of three of the remaining four sides of the six-sided pouch-type battery cell 100 except for the two sides thereof on which the electrode leads 110 are formed. In this way, the cell cover 200 may be configured such that openings are formed on both sides corresponding to the electrode lead 110.

According to this embodiment of the present disclosure, it is possible to induce the discharge direction of flames or the like to the opening of the cell cover 200. For example, according to the above embodiment, the front and rear sides of the cell cover 200 where the electrode lead 110 is located are open, so that flames or the like may be discharged in these open directions. In particular, when the cell cover 200 is configured with the front and rear sides open as described above, side directional venting may be easily implemented. Alternatively, when the bottom or top of the cell cover 200 is configured in an open form, directional venting may be made toward the open side (open end) of the bottom or top of the cell cover 200.

According to this embodiment of the present disclosure, the configuration of supporting and protecting one or more battery cells by one cell cover 200 may be easily implemented. In particular, according to the above embodiment, the lower edge portion E2 may be located adjacent to the open end of the cell cover 200 to face the pack case 300 without being surrounded by the cell cover 200, and may be in direct face-to-face contact with the case 300. Therefore, heat from the pouch-type battery cell 100 wrapped by the cell cover 200 may be quickly and smoothly discharged toward the pack case 300 below. Accordingly, the cooling performance of the battery pack 10 may be secured more effectively.

In particular, this configuration may be implemented more effectively when cooling is mainly performed in the lower portion of the pack case 300. For example, in the case of a battery pack mounted in an electric vehicle, cooling may be mainly performed in the lower portion of the pack case 300 as it is mounted on the lower portion of the vehicle body. At this time, as in the above embodiment, when the lower edge portion E2 of each pouch-type battery cell 100 is in face-to-face contact with the pack case 300, heat is quickly transferred from each pouch-type battery cell 100 to the pack case 300, and thus cooling performance may be further improved.

In addition, according to the above embodiment, when high-temperature gas or flame is discharged from the pouch-type battery cell 100 in a situation such as thermal runaway, the discharged gas or flame may be effectively prevented from heading toward the upper side. In particular, when a passenger is located on the upper side of the battery pack 10, such as in an electric vehicle, it is possible to suppress or delay gas or flame from heading toward the passenger according to the above embodiment.

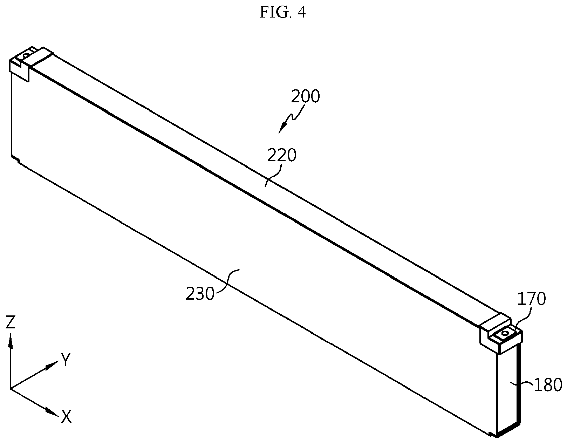

FIG. 4 is a combined perspective view of the configuration of FIG. 2.

As shown in FIGS. 2 and 4, the cell unit U1 may further include a busbar frame 170 and an insulating cover 180.

The busbar frame 170 supports the electrode lead 110 of at least one pouch-type battery cell 100 covered by the cell cover 200, and may be configured to electrically connect this electrode lead 110 to an electrode lead 110 of another pouch-type battery cell 100. In this case, the busbar frame 170 may have a terminal electrically connected to the electrode lead 110.

The insulating cover 180 may be configured to prevent a short circuit of the electrode lead 110 or the busbar. To this end, the insulating cover 180 may be made of a polymer synthetic resin having insulating properties.

Moreover, when the electrode leads 110 are provided on both sides of the pouch-type battery cell 100, the busbar frame 170 and the insulating cover 180 may also be included on both sides where the electrode leads 110 are provided. For example, as shown in FIGS. 2 and 4, when the electrode leads 110 protrude both in the front side (X-axis direction in the drawing) and in the rear side (-X-axis direction in the drawing), the busbar frame 170 and the insulating cover 180 may also be located on both the front and rear sides.

Meanwhile, in the battery pack according to the present disclosure, a thermal interface material (TIM) may be interposed to increase heat transfer performance between different components. For example, TIM may be filled between the pouch-type battery cell 100 and the cell cover 200, between the cell cover 200 and the pack case 300, and/or between the pouch-type battery cell 100 and the pack case 300. In this case, the cooling performance of the battery pack may be further improved. The TIM is intended to reduce contact thermal resistance between members. In battery pack where cooling is important, it is necessary to improve the thermal performance of the entire system by using a material capable of minimizing contact thermal resistance as described. The TIM may be diverse, such as a thermally conductive grease, a thermal sheet, a thermal pad, a thermally conductive adhesive, and a phase change material (PCM). For a specific example, the TIM may be any one of a thermally conductive silicone-based bond, a thermally conductive silicone pad, and a thermally conductive acrylic bond. Heat-dissipating silicone-based adhesives and heat-dissipating acrylic adhesives are commercially available in one or two liquid types and may be applied between different components by means of coating or injection. The heat-dissipating silicone pad includes a base film such as double-sided tape and release paper on the top and bottom of it, which may be applied between different components by an adhesive method after removing the release paper. Since heat-dissipating silicone-based adhesives, heat-dissipating silicone pads, and heat-dissipating acrylic adhesives have higher thermal conductivity compared to general adhesives, the amount and speed of heat transfer between different components may be further increased. Therefore, according to this embodiment of the present disclosure, the heat dissipation performance of the pouch-type battery cell 100 may be further enhanced, so that the cooling performance of the battery pack 10 may be further improved.

As seen in FIGS. 2 to 4, the cell cover 200 can be said to be formed in a shape approximately similar to the letter n. And, it can be said that the cell cover 200 is configured to cover other portions excluding the front and rear sides where the electrode lead 110 protrudes, and the lower side of the pouch-type battery cell 100 accommodated therein, through this shape. That is, the cell cover 200 may be arranged to cover the outer and upper sides of the receiving portion R of the pouch-type battery cell 100 accommodated therein.

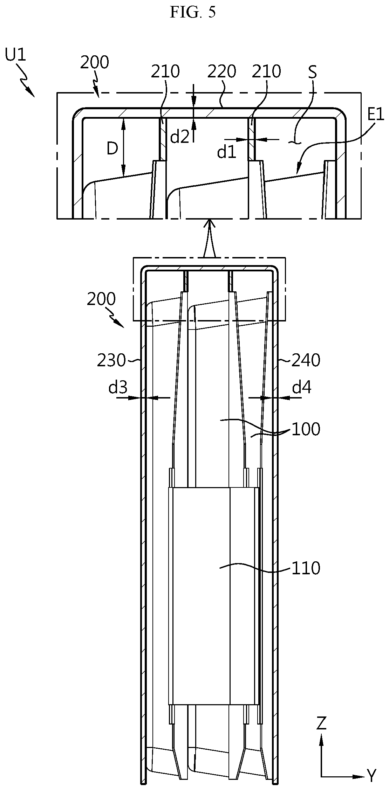

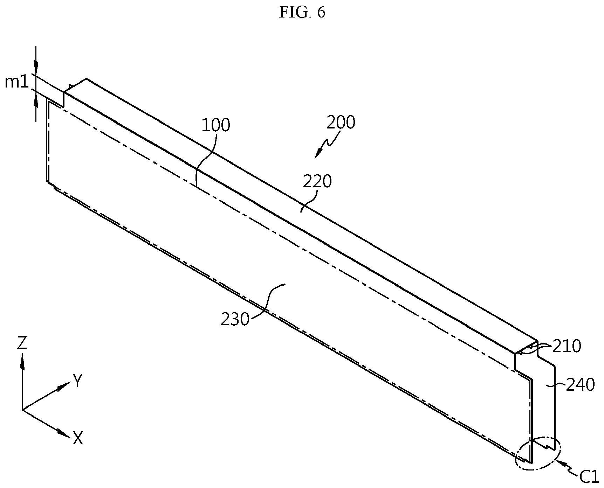

FIG. 5 is a cross-sectional view of FIG. 4. FIG. 6 is a perspective view of the cell cover shown in FIG. 2. A preferred embodiment of the cell cover 200 will be described with reference to FIGS. 2 to 6.

More specifically, the cell cover 200 may include an upper cover portion 220, a first side cover portion 230, and a second side cover portion 240, as shown in FIGS. 2 to 6. In addition, the cell cover 200 has a separation space S between the cell cover and the pouch-type battery cell 100, and may include a partition member 210 that extends from the inner side of the cell cover 200 and is configured to partition the separation space S. Venting gas may be discharged into the separation space S. There may be one or more partition members 210.

While the pouch-type battery cell 100 has the advantage of being able to implement a secondary battery of the same capacity with a smaller volume and mass on account of its being lightweight, less prone to electrolyte leakage, and flexible in shape, it has a task of ensuring safety due to a risk of explosion in case of overheating, which is one of the important tasks. Overheating of the pouch-type battery cell 100 occurs due to various reasons, one of which may be a case where an overcharge exceeding a limit flows through the pouch-type battery cell 100. When an overcharge is applied, the pouch-type battery cell 100 generates heat by Joule heat, and thus the internal temperature of the pouch-type battery cell 100 rapidly increases. A rapid rise in temperature may cause a decomposition reaction of the electrolyte to generate gas. This resulting increase in pressure inside the pouch exterior material may cause a swelling phenomenon, a type of bulging phenomenon, which may lead to serious problems such as explosion of the secondary battery. When gas is generated inside the pouch-type battery cell due to exposure to high temperature, external impact, and the like, as well as such overcharge, it is necessary to effectively discharge the gas to ensure the safety of the secondary battery. Discharging gas generated inside the secondary battery to the outside is called venting. The cell cover 200 included in the battery pack 10 according to an embodiment of the present disclosure may be configured to allow venting gas to be discharged into the separation space S between the cell cover and the pouch-type battery cell 100, thereby ensuring the safety of the secondary battery.

Here, the upper cover portion 220 may be configured to surround the top of the upper edge portion E1 of the pouch-type battery cell 100 accommodated therein. In particular, the portion (cover portion) located between the two side cover portions of the cell cover 200 and the side of the pouch-type battery cell 100 facing the portion may be spaced apart from each other by a predetermined distance. And, a separation space S is formed between the upper cover portion 220 and the pouch-type battery cell 100. This separation space S may be configured in an empty form.

For example, the upper cover portion 220 may be configured to be spaced apart from the upper edge portion E1 of the pouch-type battery cell 100. More specifically, referring to the embodiment of FIG. 5, the lower surface (inner surface) of the upper cover portion 220 and the side portion of the pouch-type battery cell 100 disposed adjacent to the upper cover portion 220 may be spaced apart from each other by a predetermined distance D. And, at least a portion of this separation space S may be configured as an empty space.

According to this embodiment of the present disclosure, a path through which venting gas or the like moves may be provided due to the empty space formed between the side portion of the pouch-type battery cell 100 and the cell cover 200. For example, when venting gas is generated due to thermal runaway or the like in the pouch-type battery cell 100 accommodated inside the cell cover 200, the generated venting gas may move in the front-rear direction (in other words, longitudinal direction) through the empty space between the upper edge portion E1 adjacent to the upper cover portion 220 and the upper cover portion 220. Accordingly, the internal pressure of the cell cover 200 may be prevented from increasing, and efficient venting control, such as guiding the discharge direction of venting gas, may be possible.

For this configuration, in particular, the cell cover 200 may be configured such that the height of both sides is higher than the height of the pouch-type battery cell 100 by m1, as shown in FIG. 6. Here, m1 may be set to D or greater.

For example, at least one pouch-type battery cell 100 is disposed between the first side cover portion 230 and the second side cover portion 240 of the cell cover 200, and may be disposed to be spaced apart from the upper cover portion 220 by m1 so that a predetermined space is formed between it and the upper cover portion 220. Then, the distance D between the upper cover portion 220 and the side portion of the pouch-type battery cell 100 is equal to m1, by which the pouch-type battery cell 100 may be spaced apart from the upper cover portion 220 to form a separation space S, and the lower side of the pouch-type battery cell 100 and the lower side of the cell cover 200 may be placed on the same plane. In another example, at least one pouch-type battery cell 100 is disposed between the first side cover portion 230 and the second side cover portion 240 of the cell cover 200, and may be disposed to be spaced apart from the upper cover portion 220 by D so that a predetermined space is formed between it and the upper cover portion 220. Then, the lower side of the cell cover 200 may protrude further by m1 - D compared to the lower side of the pouch-type battery cell 100.

The pouch-type battery cell 100 may be configured to be in close contact with the inner surfaces of the first side cover portion 230 and the second side cover portion 240. In this case, at least one pouch-type battery cell 100 may be adhered and fixed to the inner surfaces of the first side cover portion 230 and the second side cover portion 240. The member for adhesion may be thermally conductive. Through this adhesion, the cell cover 200 is firmly coupled to the pouch-type battery cell 100 and is in thermal contact with the pouch-type battery cell 100, which may help discharge heat generated in the pouch-type battery cell 100 to the outside of the pouch-type battery cell 100. In addition, the gap between the pouch-type battery cell 100 and the upper cover portion 220 may be maintained, thereby making it possible to maintain the separation space S.

The upper cover portion 220 may be configured in a planar shape. In this case, the upper cover portion 220 has a cross-section formed in a straight shape in the horizontal direction, so that the upper edge portion E1 of the pouch-type battery cell 100 may be wrapped in a straight shape from the outside.

The first side cover portion 230 may be configured to extend downward from one end of the upper cover portion 220. For example, the first side cover portion 230 may be configured to extend long in a downward direction (-Z-axis direction in the drawing) from the left end of the upper cover portion 220. Moreover, the first side cover portion 230 may be formed in a planar shape. In this case, the first side cover portion 230 may be configured in a bent form at the upper cover portion 220.

And, the first side cover portion 230 may be configured to surround the outside of one side receiving portion R of the pouch-type battery cell 100 accommodated therein. For example, when one pouch-type battery cell 100 is accommodated in the cell cover 200, the first side cover portion 230 may be configured to surround the left surface of the receiving portion R of the accommodated pouch-type battery cell 100. Here, the first side cover portion 230 may be in direct contact with the outer surface of the receiving portion R.

The second side cover portion 240 may be positioned to be spaced apart from the first side cover portion 230 in the horizontal direction. And, the second side cover portion 240 may be configured to extend downward from the other end of the upper cover portion 220. For example, the second side cover portion 240 may be configured to extend long in a downward direction from the right end of the upper cover portion 220. Moreover, the second side cover portion 240 may also be configured in a planar shape like the first side cover portion 230. In this case, it can be said that the second side cover portion 240 and the first side cover portion 230 are disposed parallel to each other while being spaced apart in the horizontal direction.

And, the second side cover portion 240 may be configured to surround the outside of the other side receiving portion R of the pouch-type battery cell 100 accommodated therein. For example, when one pouch-type battery cell 100 is accommodated in the cell cover 200, the second side cover portion 240 may be configured to surround the right surface of the receiving portion R of the accommodated pouch-type battery cell 100 from the right side. Here, the second side cover portion 240 may be in direct contact with the outer surface of the receiving portion R.

In the above embodiment, the internal space may be limited by the upper cover portion 220, the first side cover portion 230, and the second side cover portion 240. And, the cell cover 200 may accommodate one or more battery cells 100 in this limited internal space.

In addition, in the above embodiment, the cell cover 200 may be configured such that one side is closed and the remaining sides are open with respect to the internal space between the first side cover portion 230 and the second side cover portion 240, which are in a vertically upright state in a form parallel to each other. For example, the space between the first side cover portion 230 and the second side cover portion 240 may be closed on the upper side by the upper cover portion 220, and the front side, the rear side, and the lower side may form an open end. At this time, the front edge portion E3 and the rear edge portion E4, where the electrode lead 110 is located, are disposed adjacent to the front open end and the rear open end, respectively, and the lower edge portion E2 may be disposed adjacent to the lower open end.

In addition, in the above embodiment, as indicated by C1 in FIGS. 2 and 6, an end C1 that is not connected to the upper cover portion 220 among the ends of the first side cover portion 230 and an end C1 that is not connected to the upper cover portion 220 among the ends of the second side cover portion 240 form an opening through which the lower side of the pouch-type battery cell 100 is exposed toward the pack case 300.

The lower ends C1 of the first side cover portion 230 and the second side cover portion 240 may contact the bottom surface of the pack case 300. In particular, this contact configuration between the lower ends C1 of the first side cover portion 230 and the second side cover portion 240 and the pack case 300 may be formed in a shape extending long in the front-rear direction. According to this embodiment, the self-supporting configuration of the cell cover 200, which may maintain the pouch-type battery cell 100 accommodated therein in an upright state, may be implemented more stably.

Moreover, the first side cover portion 230 and the second side cover portion 240 may have the same height. That is, the first side cover portion 230 and the second side cover portion 240 may have the same length extending downward from the upper cover portion 220. In this case, the self-supporting configuration of the cell cover 200 may be achieved more easily.

Meanwhile, to describe again the cell cover 200 and the pouch-type battery cell 100 according to an embodiment of the present disclosure, the upper cover portion 220 may face the upper edge portion E1 of the pouch-type battery cell 100 and may surround the upper edge portion E1 together with the first side cover portion 230 and the second side cover portion 240.

In addition, the cross-sectional area of the first side cover portion 230 and the second side cover portion 240 is provided larger than the cross-sectional area of the pouch-type battery cell 100 facing the first side cover portion 230 and the second side cover portion 240, so that the receiving portion R may be prevented from being exposed to the outside, thereby ensuring maximum safety.

In particular, the pouch-type battery cell 100 may include a sealing portion and an unsealed portion as edge portions E1 to E4. The cell cover 200 surrounds the pouch-type battery cell 100, and may be configured to surround at least a portion of the sealing portion among the edge portions E1 to E4, while at least a portion of the unsealed portion is uncovered and exposed to the outside. For example, referring to the embodiment of FIG. 2, the cell cover 200 may be configured to cover the upper edge portion E1 that is a part of the sealing portion of the pouch-type battery cell 100. In this case, the pouch-type battery cell 100 accommodated inside the cell cover 200 can be said to be configured such that the upper edge portion E1, which is a sealing portion, faces the upper cover portion 220. In addition, the cell cover 200 may surround the pouch-type battery cell 100 so that the lower edge portion E2, which is an unsealed portion of the pouch-type battery cell 100, is exposed to the outside. In this case, the lower edge portion E2, which is an unsealed portion of the pouch-type battery cell 100, can be said to be disposed on the open surface of the cell cover 200.

In the pouch-type battery cell 100, the upper edge portion E1, which is a sealing portion, may be relatively more vulnerable to the discharge of high-temperature gas or flame than the lower edge portion E2, which is an unsealed portion. However, according to the above embodiment, the upper edge portion E1, which is a sealing portion, may be disposed to face the upper cover portion 220, thereby being more advantageous for directional venting.

In addition, in the pouch-type battery cell 100, the lower edge portion E2, which is an unsealed portion, has a relatively larger cross-sectional area and a flat shape than the upper edge portion E1, which is a sealing portion, so that it may be disposed on the open side of the cell cover 200 and be in direct contact with the thermal resin to be described later, thereby increasing cooling efficiency.

Furthermore, when the lower case 320 is seated on one side of the vehicle body, the first side cover portion 230 and the second side cover portion 240 may extend from the upper cover portion 220 toward one side of the vehicle body, and the upper edge portion E1 may be disposed farther from one side of the vehicle body than the lower edge portion E2. That is, when the lower case 320 is seated on one side of the vehicle body, the cell cover 200 may be configured such that the side disposed relatively close to the one side of the vehicle body is open.

The cell cover 200 may be integrally formed. In this case, the cell cover 200 may be configured by bending a metal plate with a plate structure. That is, the cell cover 200 may be formed in a shape where one plate is bent.

The cell cover 200 may be configured to surround one or more pouch-type battery cells 100 by bending both ends of one plate in the same direction. In particular, when an upper cover portion 220, a first side cover portion 230, and a second side cover 240 are provided in one cell cover 200, the upper cover portion 220, the first side cover portion 230, and the second side cover portion 240 may be formed of one plate. In this case, it can be said that several components of the cell cover 200 are integrally manufactured.

Here, each component may be distinguished through a bent portion. In particular, two bent portions may be formed in one plate. And, based on these two bent portions, the upper cover portion 220, the first side cover portion 230, and the second side cover portion 240 may be distinguished. In particular, the central portion of one plate may form the upper cover portion 220, and both sides may be bent or folded in a downward direction around the upper cover portion 220, thereby forming the first side cover portion 230 and the second side cover portion 240. In this way, the configuration of forming a bent portion in one plate to form the cell cover 200 may be implemented in various ways, such as pressing or roll forming.

According to this embodiment of the present disclosure, manufacturing of the cell cover 200 may be more simplified. In addition, the cell cover 200 with a simplified structure is made of a metal material having higher rigidity than the case of the pouch-type battery cell 100, such as the pouch exterior material, so that at least one pouch-type battery cell 100 covered by the cell cover 200 may be protected from external impact or vibration. In addition, in this case, heat conduction performance through the cell cover 200 is further enhanced, which may further improve cooling performance.

Meanwhile, the cell cover 200 may be made of various materials to ensure rigidity. In particular, the cell cover 200 may be made of a metal material. In the case of such a metal material, the stacked state of the pouch-type battery cells 100 may be more stably maintained, and the pouch-type battery cells 100 may be more safely protected from external impact. In particular, the cell cover 200 may include a steel material, specifically a stainless steel (SUS) material. For example, the cell cover 200 may be entirely made of SUS material. The cell cover 200 made of SUS may have a thickness of approximately 2 mm. For example, as shown in FIG. 5, when the cell cover 200 includes an upper cover portion 220, a first side cover portion 230, and a second side cover portion 240, the thickness d2 of the upper cover portion 220, the thickness d3 of the first side cover portion 230, and the thickness d4 of the second side cover portion 240 may be the same and be approximately 2 mm.

As such, when the cell cover 200 is made of a steel material, it has excellent mechanical strength and rigidity, and thus may more stably support the stacked state of the pouch-type battery cells 100. In addition, in this case, it is possible to more effectively prevent damage to or breakage of the pouch-type battery cell 100 from external impacts, such as needle bodies. In addition, in this case, handling of the pouch-type battery cell 100 may become easier.

In addition, as in the above embodiment, when the cell cover 200 is made of a steel material, the overall structure may be stably maintained due to its high melting point in the event of occurrence of a flame from the pouch-type battery cell 100. In particular, since the steel material has a higher melting point than aluminum material, it may not be melted even with flame ejected from the pouch-type battery cell 100 and its shape may remain stable. Therefore, the effect of preventing or delaying flame propagation between the pouch-type battery cells 100, venting control effect, and the like may be secured excellently, and even when a thermal event occurs, internal short circuits or structural collapse may be prevented, thereby increasing structural safety.

The cell cover 200 may include an insulating coating layer on its inner surface. The insulating coating layer may be coated, applied, or attached with any one of silicone resin, polyamide, and rubber. According to the configuration of the insulating coating layer of the cell cover 200 according to this embodiment, the insulating coating effect may be maximized with a minimum amount of coating. In addition, since an insulating coating layer is applied to the inner surface of the cell cover 200, insulation between the pouch-type battery cell 100 and the cell cover 200 may be strengthened.

In addition, the cell cover 200 may further include an insulating member. The insulating member may be made of an electrically insulating material and may be provided on the inner surface of the cell cover 200 in which the pouch-type battery cell 100 is accommodated. In particular, the insulating member may have an adhesive layer on at least one side, which may be adhered to the inner surface of the cell cover 200. In addition, the insulating member may have adhesive layers on both sides, which may be adhered not only to the inner surface of the cell cover 200 but also to the pouch-type battery cell 100. In addition, the insulating member may be made of a heat-resistant material. For example, the insulating member may be configured in the form of a heat-resistant tape in which an adhesive is applied to the surface of a ceramic sheet having heat resistance. The insulating member may also be a film made of a polyimide (PI) material. The thickness of the insulating member may be approximately 0.5 mm. In addition, the insulating member may also be located on the inner surface and the outer surface of the cell cover 200, that is, on both sides.

In addition, the battery pack 10 according to the present disclosure may further include a control module 400 accommodated in the internal space of the pack case 300, as shown in FIG. 1. This control module 400 may include a BMS. The control module 400 is mounted in the internal space of the pack case 300 and may be configured to generally control the charge/discharge operation and data transmission/reception operation of the pouch-type battery cell 100. The control module 400 may be provided in a pack unit rather than a module unit. More specifically, the control module 400 may be provided to control the charge/discharge state, power state, and performance state of the pouch-type battery cell 100 through pack voltage and pack current. The control module 400 estimates the state of the pouch-type battery cell 100 in the battery pack 10 and manages the battery pack 10 using the estimated state information. For example, state information of the battery pack 10, such as state of charge (SOC), state of health (SOH), maximum input/output power allowance, and output voltage of the battery pack 10, is estimated and managed. And, using this state information, the charging or discharging of the battery pack 10 may be controlled, and furthermore, the replacement time of the battery pack 10 may also be estimated.

The battery pack 10 according to the present disclosure may further include a battery disconnect unit, as shown in FIG. 1. The battery disconnect unit (BDU) 500 may be configured to control the electrical connection of battery cells to manage the power capacity and function of the battery pack 10. To this end, the battery disconnect unit 500 may include a power relay, a current sensor, a fuse, and the like. The battery disconnect unit 500 is also provided in a pack unit rather than a module unit, and various disconnect units known at the time of filing the present disclosure may be employed.

In addition, the battery pack 10 according to the present disclosure may further include various components of battery packs known at the time of filing the present disclosure. For example, the battery pack 10 according to an embodiment of the present disclosure may further include a manual service disconnector (MSD) that allows an operator to shut off the power by manually disconnecting the service plug. In addition, it may also further include flexible busbars or cables for interconnecting at least one cell unit block.

Referring to FIG. 5 again to look at the partition member 210 in more detail, the cell cover 200 covers the upper side of the pouch-type battery cell 100, and the partition member 210 protrudes from the inner top of the cell cover 200 and extends downward.

The thickness d1 of the partition member 210 may be thinner than the thickness d2 of the upper cover portion 220, the thickness d3 of the first side cover portion 230, and the thickness d4 of the second side cover portion 240 (d1 < d2, d3, d4). By making the thickness d1 of the partition member 210 thin, the directional venting effect may be achieved while minimizing the total weight of the cell cover 200 including the partition member 210. Therefore, according to the present disclosure, the overall weight and volume of the battery pack 10 may be reduced, and manufacturing costs may be reduced.

In this embodiment where the cell cover 200 surrounds a plurality of pouch-type battery cells 100, the partition member 210 may be configured to partition each of the plurality of pouch-type battery cells 100. For example, as shown, when the cell cover 200 surrounds three pouch-type battery cells 100, two partition members 210 may be included to partition each of these pouch-type battery cells 100. That is, the number of partition members 210 may be adjusted corresponding to the number of pouch-type battery cells 100 wrapped by the cell cover 200. Preferably, one or more partition members 210 may be disposed along the stacking direction (Y-axis direction in the drawing) of the pouch-type battery cells 100.

Preferably, the partition member 210 shields the upper edge portion E1 of any one pouch-type battery cell 100 from directly facing the upper edge portion E1 of another pouch-type battery cell 100. To this end, the partition member 210 extends downward from the upper cover portion 220 to the top of the pouch-type battery cell 100.

Through this, the separation space S is clearly partitioned, and there is an effect of individually accommodating the pouch-type battery cells 100 in each partitioned separation space S. With this configuration, heat transfer or venting gas movement to other adjacent pouch-type battery cells 100 may be suppressed. In addition, when the partition member 210 is clearly inserted between the two pouch-type battery cells 100, together with the isolation between the partitioned separation spaces S, the sealing in the width direction of the separation space S is improved, thereby increasing the effect of venting gas being discharged in the longitudinal direction. That is, there is an effect of securing a directional venting path for each pouch-type battery cell 100 even inside the cell cover 200 that allows directional venting on a cell unit basis.

As described above, the upper edge portion E1 of the pouch-type battery cell 100 may be a DSF portion, and according to this embodiment, the partition member 210 has the effect of isolating the DSF portions of the adjacent pouch-type battery cell 100 from each other. Venting gas or flame may be discharged from the DSF portion of the pouch-type battery cell 100, and according to this configuration of the partition member 210, simultaneous ignition between adjacent pouch-type battery cells may be more reliably suppressed.

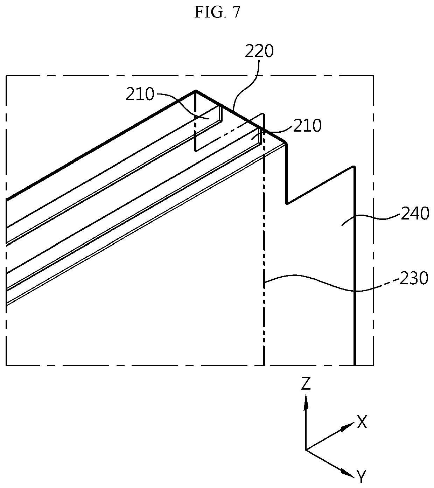

FIG. 7 is a bottom perspective view of the cell cover shown in FIG. 2.

Referring to FIG. 7, the partition member 210 is configured to form a venting path corresponding to each of the plurality of pouch-type battery cells 100 along the stacking direction of the plurality of pouch-type battery cells 100. This venting path may provide a space for the venting gas or flame emitted from the pouch-type battery cell 100 to flow inside the cell cover 200.

Preferably, the partition member 210 is a partition wall. In this embodiment, these partition walls may be configured to be continuously constructed along the longitudinal direction of the pouch-type battery cell 100 and to be disposed to be spaced apart along the width direction of the pouch-type battery cell 100. The partition wall may be formed parallel to the direction of discharging the venting gas (the front-rear direction), in which case, gas movement or heat transfer in the direction across the partition wall (the left-right direction) may be suppressed. Therefore, when a thermal event occurs, diffusion to the adjacent pouch-type battery cell 100 may be reduced, and the battery pack 10 including it may ensure excellent safety against thermal events.

Since the cell cover 200 may be configured such that openings are also formed on both sides corresponding to the electrode lead 110, venting gas in the separation space S may escape to both sides of the cell cover 200. Accordingly, the flow of venting gas within the separation space S is in the front-rear direction parallel to the longitudinal direction of the pouch-type battery cell 100. If the partition wall is formed in parallel with this longitudinal direction, the flow of venting gas or flame may be guided through the inner top of the cell cover 200 during thermal runaway of the pouch-type battery cell 100 and discharged to the outside through the opening of the cell cover 200. Accordingly, the flow of venting gas or flame may be guided in a more constant direction.

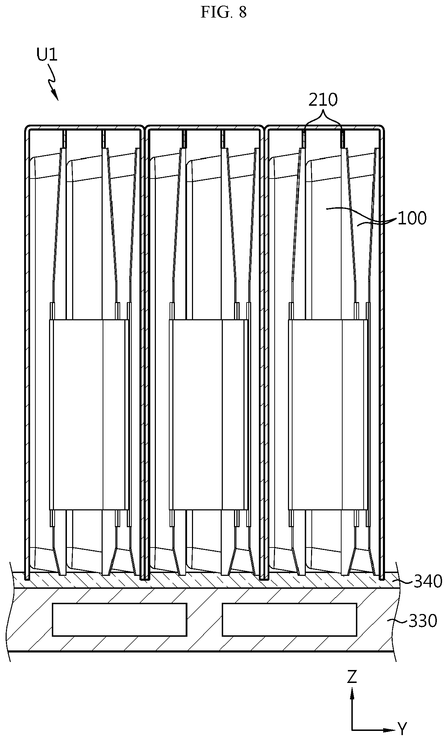

FIG. 8 is a view schematically showing a partial cross-sectional configuration of a battery pack according to an embodiment of the present disclosure.

As shown in FIG. 8, the battery pack 10 may be configured to include a heat sink 330. Here, the heat sink 330 refers to an object that absorbs and dissipates heat from another object through direct or indirect thermal contact. This heat sink 330 may be disposed on the bottom of the pack case 300. In particular, the battery pack 10 may also be arranged in the form of a heat sink where the bottom plate of the lower case 320 has a flow path through which cooling water may flow for light weight and component simplicity.

The pouch-type battery cell 100 is thermally coupled to the heat sink 330. The pouch-type battery cell 100 and the heat sink 330 may be in direct thermal contact. The pouch-type battery cell 100 may also be thermally coupled in such a way that the cell cover 200 thermally coupled to the pouch-type battery cell 100 is in direct thermal contact with the heat sink 330 without direct thermal contact. In this case, the cell cover 200 may serve as a cooling fin that transfers heat of the pouch-type battery cell 100 to the heat sink 330, thereby simplifying and streamlining the battery pack manufacturing process and improving the cooling performance of the pouch-type battery cell 100.

According to the configuration of the cell cover 200 of this embodiment, the pouch-type battery cell 100 may be disposed so that the lower edge portions thereof are exposed below the cell cover 200 through the lower opening of the cell cover 200 to face the bottom plate of the lower case 320. A thermal resin 340 may be provided between the lower edge portions of the pouch-type battery cell 100 and the bottom plate of the lower case 320. Therefore, in the battery pack 10 according to another embodiment of the present disclosure, the heat of each pouch-type battery cell 100 may be dissipated from the lower edge portion and/or cell cover 200 of each pouch-type battery cell 100 → the thermal resin 340 → the lower case 320 functioning as a heat sink 330.

In this embodiment, the heat sink 330 has a thermal resin 340 interposed between it and the plurality of pouch-type battery cells 100. The thermal resin 340 may be applied to the upper surface of the heat sink 330. And, on the upper surface of the heat sink 330 to which the thermal resin 340 is applied, a plurality of cell units U1, that is, a plurality of pouch-type battery cells 100 and a plurality of cell covers 200 may be seated.

Here, the thermal resin 340 may be made of a material that conducts heat and has adhesive properties. The thermal resin 340 may transfer heat to the heat sink 330 so that the heat generated in the pouch-type battery cell 100 is dissipated through the heat sink 330. In addition, since the thermal resin 340 has adhesive properties, the cell cover 200 may be structurally coupled to the heat sink 330.

In this embodiment, the plurality of pouch-type battery cells 100 to which the cell cover 200 is coupled may be directly seated on the upper surface of the heat sink 330 to which the thermal resin 340 is applied. In this case, the plurality of cell units U1 may be stably coupled and fixed to the upper surface of the heat sink 330 by the thermal resin 340. In particular, the pouch-type battery cell 100 and the cell cover 200 included in each cell unit U1 may be formed to have a length in the vertical direction longer than a width in the left-right direction. Therefore, the pouch-type battery cell 100 and the cell cover 200 can be said to be seated on the upper surface of the heat sink 330 in a standing state, that is, in an upright state. In this case, the thermal resin 340 may maintain the upright state of the cell cover 200 more stably.

In another example, a means such as a fixing groove that allows the lower end of the cell cover 200 to be inserted and fixed is provided on the top of the heat sink 330, and the cell cover 200 may be fitted and fixed thereto. According to this example, the coupling property between the cell cover 200 and the heat sink 330 may be further improved. Therefore, even in situations such as vibration or impact applied to the battery pack 10 or swelling of the pouch-type battery cell 100, the stacked state of the cell cover 200 and the pouch-type battery cell 100 accommodated therein may be maintained stably. Moreover, according to this example, it is possible to effectively prevent the cell cover 200 from moving in the left-right direction. In addition, the assembly position of the cell cover 200 may be guided through a fitting configuration between the cell cover 200 and the heat sink 330. Therefore, in this case, the assemblability of the battery pack 10 may be further improved.

The cell cover 200 may be included in plurality in the battery pack 10. When a plurality of cell covers 200 are included, the plurality of cell covers 200 may be spaced apart from each other as shown in FIG. 8. For example, the plurality of cell covers 200 may be spaced apart in the Y-axis direction. Direct heat transfer between the cell covers 200 may be blocked through the spaced apart space. In addition, separate members required to configure the battery pack 10 may be inserted through the spaced apart space. Alternatively, an insulating pad or a flame suppression pad may also be interposed in at least a portion between the plurality of cell covers 200. Such an insulating pad or a flame suppression pad may prevent heat or flame that may be generated within any one cell cover 200 from being transferred to another cell cover 200 and affecting other pouch-type battery cells 100. The flame suppression pad may be formed of a heat-resistant resin such as vinyl chloride resin, a material such as silicon or ceramic, a composite of a heat-resistant resin and a ceramic or glass filler, or a metal plate coated with insulation, but this is exemplary and any flame-retardant material is sufficient. It is preferable that the flame suppression pad is made of a material that does not decompose, melt, or ignite at least up to the temperature at which thermal runaway of the pouch-type battery cell 100 occurs (e.g., 150°C to 200°C).

In addition, when a plurality of cell covers 200 are stacked and included in the battery pack 10, an adhesive member may be interposed between the cell covers 200. For example, an adhesive member may be interposed in a portion where the two cell covers 200 face each other to adhesively fix them. Through this adhesive configuration, the connection configuration between multiple cell covers 200 may be made more robust.

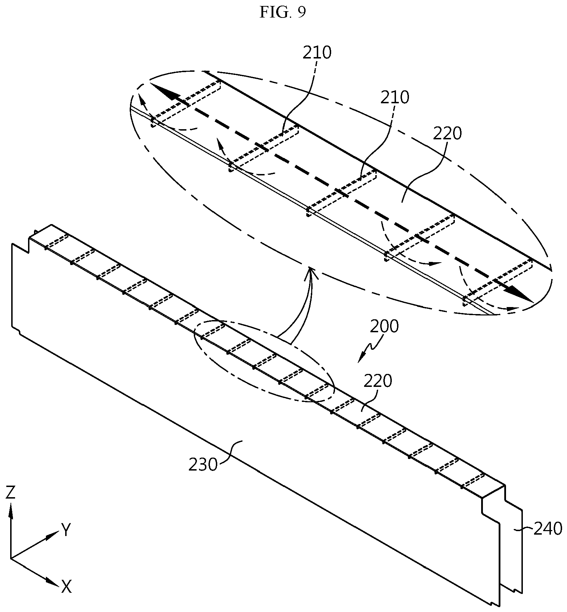

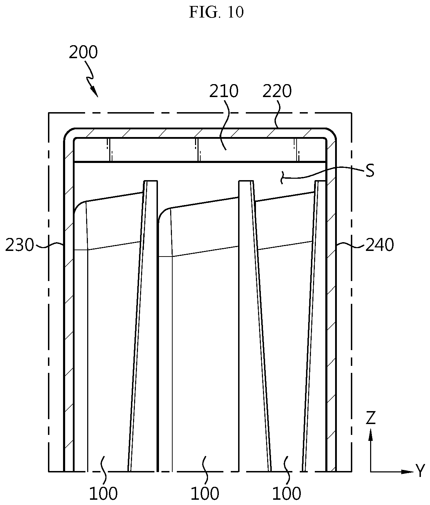

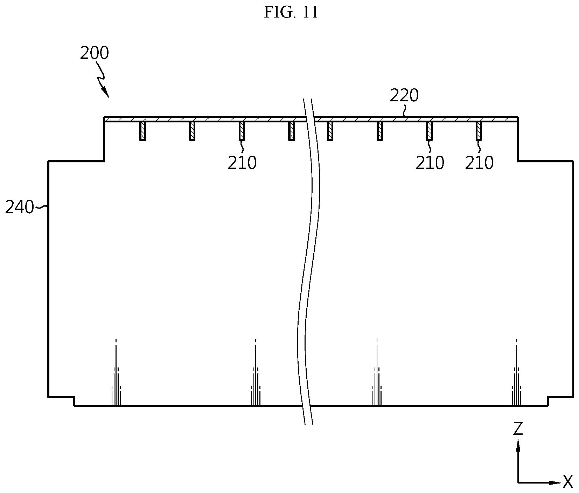

FIG. 9 is a perspective view schematically showing another cell cover that may be included in a battery pack according to an embodiment of the present disclosure. FIG. 10 is a view schematically showing a cross-sectional configuration along the Y-axis direction while the cell cover shown in FIG. 9 surrounds the pouch-type battery cell. FIG. 11 is a view schematically showing a cross-sectional configuration of the cell cover shown in FIG. 9 along the X-axis direction.

Referring to FIGS. 9 to 11, venting gas moves through the separation space S within the cell cover 200. Here, the partition member 210 is configured to prevent the movement of the venting gas. In particular, the partition member 210 may be configured to prevent horizontal movement of the venting gas. In addition, in this case, one or more partition members 210 may be disposed along the flow direction of the venting gas.

The venting gas moves along the longitudinal direction or front-rear direction of the pouch-type battery cell, as indicated by the bold dotted arrow in FIG. 9. At this time, the partition member 210 may be located in the movement path of the venting gas. Therefore, when the venting gas moves, the movement may be suppressed by the partition member 210. A preferred partition member 210 is a partition wall. The partition walls may be configured to be continuously constructed along the width direction of the pouch-type battery cell 100 and to be disposed to be spaced apart along the longitudinal direction. In this way, the cell cover 200 including the partition wall-type partition member 210 may be called a cell cover including a partition wall on the top inner surface. In particular, in this embodiment, the partition wall is installed across the moving direction of the venting gas, thereby reducing the straightness of the venting gas.

Preferably, the partition wall may be provided at a portion where the cell cover 200 surrounds the upper edge portion E1 of the pouch-type battery cell 100. In an embodiment where the cell cover 200 includes an upper cover portion 220, a first side cover portion 230, and a second side cover portion 240, the partition wall may be a plate in contact with the inner surface of the upper cover portion 220, the top inner surface of the first side cover portion 230, and the top inner surface of the second side cover portion 240. A plate is a substantially rectangular parallelepiped and refers to a structure whose height is small compared to the width and length of its wide surface. This plate may be disposed in an upright state on the inner surface of the upper cover portion 220 of the cell cover 200. In particular, the wide surface of the partition wall may be disposed to face the venting gas.

When venting gas is generated in the pouch-type battery cell 100 accommodated in the cell cover 200, the venting gas moves toward the upper cover portion 220 due to its high temperature characteristics and is likely to move in the front-rear direction. In this case, when the partition wall is positioned on the inner surface of the upper cover portion 220, the effect of blocking flames or sparks may be reliably achieved.

As shown in FIG. 11, the partition wall may be provided so that a plane direction thereof is perpendicular to the inner surface of the upper cover portion 220. In this case, while the venting gas moves in the front-rear direction, the effect of blocking sparks and the like may be further improved by the partition wall.

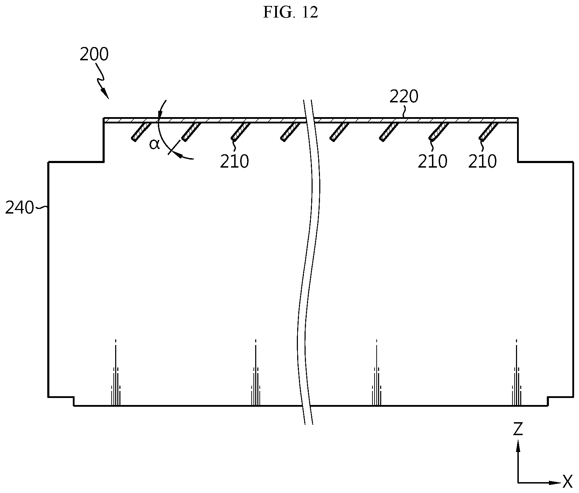

FIG. 12 is a view corresponding to FIG. 11 and shows another embodiment of the cell cover of FIG. 9.

Referring to FIG. 12, the partition wall may be provided in an inclined form with respect to the inner surface of the upper cover portion 220. Shown is that the partition wall is in a shape where the plane direction is inclined toward the proceeding direction of the venting gas at an acute angle α with respect to the inner surface of the upper cover portion 220. On the contrary, the partition wall may be configured in a shape where the plane direction is inclined at an obtuse angle with respect to the inner surface of the upper cover portion 220.

This partition wall-type partition member 210 has the effect of blocking flames, sparks, particles, and the like when venting gas is discharged along the longitudinal direction from the top of the pouch-type battery cell 100. If a fire or explosion occurs in a portion of the pouch-type battery cell 100, fragments of the high-temperature electrode assembly and flames may be discharged together with the high-temperature venting gas. In this case, if the venting gas has a strong straight flow, high-temperature fragments and flames are discharged with a strong force and for example, there is a risk of directly hitting the pack case 300. The partition wall-type partition member 210 acts as an obstacle in the moving direction of the venting gas, which reduces the straightness of the venting gas, thereby suppressing strong emissions of flames and sparks. Therefore, the safety of the battery pack 10 may be greatly improved. According to this embodiment, it may not only suppress or delay the emission of flames or sparks with strong straightness, but also contribute to lowering the temperature of the venting gas while it is discharged along a longer movement path.

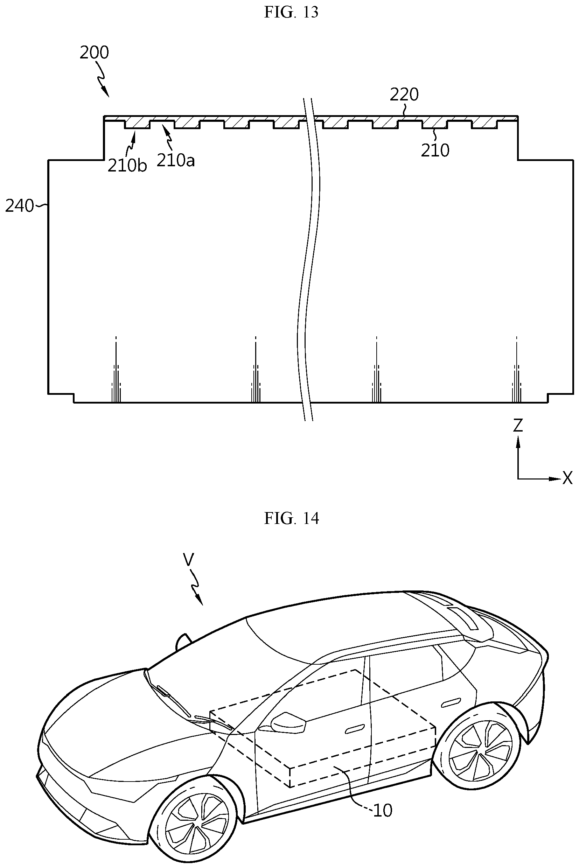

FIG. 13 is a view corresponding to FIG. 11 and shows still another embodiment of the cell cover of FIG. 9.

The partition member 210 may be a portion provided in a concavo-convex shape on the inner surface of the cell cover 200.

Referring to FIG. 13, the concave portion 210a and the convex portion 210b in a concavo-convex shape may be alternately positioned along the longitudinal direction of the pouch-type battery cell 100.

In the illustrated example, the cross-sections of the concave portion 210a and the convex portion 210b are angled, but the cross-sections of the concave portion and the convex portion may be curved, such as a wave pattern. The angled cross-section may form a reliable physical barrier to flames or sparks, which may provide excellent blocking effects. The curved cross-section may be advantageous in terms of venting gas discharge as the generation of vortex to be caused by hitting the partition member 210 is less than in the case of the angled cross-section.

In addition, the unevenness formed on the inner surface of the cell cover 200 may be provided by the shape of the cell cover 200 itself, but may also be provided by bonding or coupling a mesh-structured small plate to the inner surface of the cell cover 200.

A mesh structure may be one in which a number of holes are installed on a metal mesh or metal plate. The holes may be formed by removing a part of the metal plate by punching or etching. The metal mesh is formed by interweaving multiple metal wires into a so-called wire mesh. In a preferred example, the mesh structure is composed of one or more layers, preferably several layers, of a metal mesh of 2 mesh or more. Mesh is a method of grading based on the size of the mesh and is represented by the number of meshes per inch of length. That is, mesh refers to a unit representing the size of the holes or particles of a sieve, and can be said to be the number of mesh eyes in a one-inch square. For example, 200 mesh means that wires with a diameter of 2/1000 inches are spaced 3/1000 inches apart, indicating there are 200 meshes in a length of one inch. Therefore, N mesh is N/25.4 mm, and for example, if a metal mesh of 2 mesh or more is used, the size of one hole is 12.7x12.7 mm² or less. Considering only anti-flammability, the smaller the mesh spacing, the better. However, if the spacing is too narrow, it is often blocked by foreign substances such as dust, and thus, be sure to use it appropriately.

The mesh structure may be non-combustible. Any of these materials may be used as long as they are difficult to burn. Specifically, any one of copper, aluminum, cast iron, Monel (Ni + Cu), SUS, and steel may be used, but is not limited thereto. In addition, it is preferable that the mesh structure is selected as a material that not only has anti-flammability ability to suppress flames, but also has mechanical properties capable of withstanding explosion pressure.

The mesh structure may be used purely by itself or laminated with a polymer resin layer, but is not limited thereto. The polymer resin layer may use any one selected from: polyvinylidene fluoride-hexafluoropropylene, polyvinylidene fluoride-trichloroethylene, polymethyl methacrylate, polyacrylonitrile, polyvinylpyrrolidone, polyvinylacetate, polyethylene-vinyl acetate copolymer, polyethylene oxide, cellulose acetate, cellulose acetate butylate, cellulose acetate propionate, cyanoethyl pullulan, cyanoethyl polyvinyl alcohol, cyanoethyl cellulose, cyanoethyl sucrose, pullulan, carboxyl methyl cellulose, acrylonitrile-styrene-butadiene copolymer, polyimide, and mixtures thereof, but is not limited thereto.

This mesh structure not only splits the flame into small pieces while it passes through, but also causes an endothermic reaction absorbing the energy of the flame, resulting in a temperature drop and an anti-flammability effect. More specifically, since the mesh structure has a small hole, gases such as gas or steam may pass through, but flames are difficult to pass through. In addition, when ignited by a mixture of combustible gas and air inside the secondary battery, the mesh structure absorbs and dissipates heat generated from the combustible gas mixture, thereby lowering the combustion temperature so that the gas on the other side does not reach its spontaneous ignition temperature. This is because the heated gas with high heat loses heat to the material that makes up the mesh structure while passing through the mesh structure. The mesh structure is made of a metal material including numerous holes, thereby making it a heat absorbing plate with a very wide cross-sectional area.

Therefore, as the flame passes through the mesh structure, it may lose enough heat that the flame can no longer maintain, and the explosion may subside.

Since the mesh structure may be provided as a thin small plate, it may be appropriately placed in the separation space S within the cell cover 200 and may suppress an increase in size of the cell unit. In addition, since the mesh structure has multiple holes, an increase in weight may also be suppressed. Thus, according to the present disclosure, an increase in size and weight of the battery pack 10 is suppressed, and safety is improved by preventing flames being ejected to the outside even in the event of flames erupting from the secondary battery. According to this embodiment of the present disclosure, external discharge of sparks, flames, high-temperature active material particles, and the like included in the venting gas may be suppressed. Therefore, fire suppression performance may be further improved. As such, according to the present disclosure, spark blocking and the like may be implemented. When the pack case 300 is made of aluminum for light weight, if sparks fly directly into the pack case 300, they may melt the pack case 300 and cause structural collapse. According to an embodiment of the present disclosure, sparks may be prevented from flying directly toward the pack case 300, so that such structural collapse may be prevented.

FIG. 14 is a view schematically showing the configuration of a vehicle according to an embodiment of the present disclosure.

Referring to FIG. 14, a vehicle V according to an embodiment of the present disclosure may include the battery pack 10 according to an embodiment of the present disclosure described above. Here, the vehicle V may include, for example, a predetermined vehicle that uses electricity as a driving source, such as an electric vehicle or a hybrid vehicle. Also, in addition to the battery pack 10 according to the present disclosure, the vehicle V may further include various other components included in the vehicle, such as a vehicle body, a motor, or the like.

The battery pack 10 may be disposed at a predetermined location within the vehicle V. The battery pack 10 may be used as an electrical energy source to drive the vehicle V by providing driving force to the motor of the electric vehicle. In this case, the battery pack 10 has a high nominal voltage of 100 V or more.

The battery pack 10 may be charged or discharged by an inverter depending on the driving of the motor and/or internal combustion engine. The battery pack 10 may be charged by a regenerative charging device coupled to a brake. The battery pack 10 may be electrically connected to the motor of the vehicle V through an inverter.

Meanwhile, the terms indicating directions as used herein such as upper, lower, left, right, front, and rear are used for convenience of description only, and it is obvious to those skilled in the art that the term may change depending on the position of the stated element or an observer.

The present disclosure has been hereinabove described with regard to a limited number of embodiments and drawings, but the present disclosure is not limited thereto and it is obvious to those skilled in the art that a variety of modifications and changes may be made thereto within the technical aspects of the present disclosure and the equivalent scope of the appended claims.

### [Explanation of reference signs]

| | | | |
|---|---|---|---|
| 10: | battery pack | 100: | pouch-type battery cell |
| 110: | electrode lead | 170: | busbar frame |
| 180: | insulating cover | 200: | cell cover |
| 210: | partition member | 220: | upper cover portion |
| 230: | first side cover portion | 240: | second side cover portion |
| 300: | pack case | 330: | heat sink |
| 340: | thermal resin | S: | separation space |
| U1: | cell unit | V: | vehicle |

## Claims

1. A battery pack comprising:
a plurality of pouch-type battery cells stacked in at least one direction;
a pack case accommodating the pouch-type battery cells in the internal space; and
a cell cover that at least partially surrounds at least some of the pouch-type battery cells among the plurality of pouch-type battery cells in the internal space of the pack case,
wherein the cell cover has a separation space between the cell cover and the wrapped pouch-type battery cell and comprises a partition member that extends from the inner side of the cell cover and is configured to partition the separation space.

2. The battery pack according to claim 1,
wherein the cell cover is configured to support the pouch-type battery cell in an upright state.

3. The battery pack according to claim 2,
wherein the cell cover covers the upper side of the pouch-type battery cell, and the partition member protrudes from the inner top of the cell cover and extends downward.

4. The battery pack according to claim 1,
wherein the cell cover partially surrounds the pouch-type battery cell so that at least one side of the wrapped pouch-type battery cell is exposed toward the pack case.

5. The battery pack according to claim 1,
wherein the pouch-type battery cell has a receiving portion in which an electrode assembly is accommodated and edge portions around the receiving portion,
wherein the cell cover is configured to surround the receiving portion and a part of the edge portions of the pouch-type battery cell.

6. The battery pack according to claim 5,
wherein the cell cover is provided to cover both sides of the receiving portion and an upper edge portion of the wrapped pouch-type battery cell.

7. The battery pack according to claim 5,
wherein the cell cover comprises an upper cover portion configured to surround the top of the upper edge portion of the pouch-type battery cell, a first side cover portion extending downward from one end of the upper cover portion and surrounding the outside of one side receiving portion of the wrapped pouch-type battery cell, and a second side cover portion extending downward from the other end of the upper cover portion and surrounding the outside of the other side receiving portion of the wrapped pouch-type battery cell.

8. The battery pack according to claim 7,
wherein a thickness of the partition member is thinner than a thickness of the upper cover portion, a thickness of the first side cover portion, and a thickness of the second side cover portion.

9. The battery pack according to claim 7,
wherein the separation space is formed between the upper cover portion and the pouch-type battery cell.

10. The battery pack according to claim 9,
wherein the partition member extends downward from the upper cover portion to the top of the pouch-type battery cell.

11. The battery pack according to claim 7,
wherein the pouch-type battery cell is configured to be in close contact with the inner surfaces of the first side cover portion and the second side cover portion.

12. The battery pack according to claim 7,
wherein the cell cover surrounds a plurality of pouch-type battery cells, and the partition member is configured to partition each of the plurality of pouch-type battery cells.

13. The battery pack according to claim 7,
wherein the cell cover surrounds a plurality of pouch-type battery cells, and the partition member is configured to form a venting path corresponding to each of the plurality of pouch-type battery cells along a stacking direction of the plurality of pouch-type battery cells.

14. The battery pack according to claim 1,
wherein the pouch-type battery cell has a receiving portion in which an electrode assembly is accommodated and edge portions around the receiving portion,
wherein the cell cover is configured to surround the receiving portion and the upper edge portion of the wrapped pouch-type battery cell,
wherein the upper edge portion is a sealing portion,
wherein the cell cover surrounds a plurality of pouch-type battery cells, and the partition member shields the upper edge portion of any one pouch-type battery cell from directly facing the upper edge portion of another pouch-type battery cell.

15. The battery pack according to claim 7,
wherein the cell cover surrounds a plurality of pouch-type battery cells, the cell cover exposes electrode leads protruding in the longitudinal direction of the pouch-type battery cell, the plurality of pouch-type battery cells are stacked in the width direction perpendicular to the longitudinal direction, and the partition member is configured such that partition walls constructed continuously along the longitudinal direction are disposed to be spaced apart along the width direction.

16. The battery pack according to claim 1,
wherein venting gas moves through the separation space, and the partition member is configured to block the movement of the venting gas.

17. The battery pack according to claim 16,
wherein the cell cover exposes electrode leads protruding in the longitudinal direction of the pouch-type battery cell, the venting gas moves along the longitudinal direction, and the partition member is configured such that partition walls constructed continuously along the width direction perpendicular to the longitudinal direction are disposed to be spaced apart along the longitudinal direction.

18. The battery pack according to claim 17,
wherein the cell cover comprises an upper cover portion configured to surround the top of the upper edge portion of the pouch-type battery cell, a first side cover portion extending downward from one end of the upper cover portion, and a second side cover portion extending downward from the other end of the upper cover portion,
wherein the partition wall is a plate in contact with the inner surface of the upper cover portion, the top inner surface of the first side cover portion, and the top inner surface of the second side cover portion.

19. The battery pack according to claim 16,
wherein the partition member is a portion provided in a concavo-convex shape on the inner surface of the cell cover.

20. A vehicle comprising a battery pack according to any one of claims 1 to 19.
